# EUROPEAN PATENT APPLICATION

(11) **EP 4 826 769 A1**
(43) Date of publication of application: **21.10.2026**
(21) Application number: 26155062.8
(22) Date of filing: 29.01.2026
(51) Int. Cl.: H01M 4/131, H01M 4/485, H01M 4/62, H01M 10/42

(54) **ELECTRODE, SECONDARY BATTERY, BATTERY PACK, AND VEHICLE**

(30) Priority: 17.04.2025 JP 2025067990
(71) Applicant: KABUSHIKI KAISHA TOSHIBA, Kawasaki-shi, Kanagawa (JP)
(72) Inventor: Yamashita, Yasunobu, Kawasaki-shi, Kanagawa (JP); Takahashi, Keitaro, Kawasaki-shi, Kanagawa (JP); Murata, Yoshiaki, Kawasaki-shi, Kanagawa (JP); Hoshina, Keigo, Kawasaki-shi, Kanagawa (JP); Harada, Yasuhiro, Kawasaki-shi, Kanagawa (JP)
(74) Representative: Hoffmann Eitle

(57) **Abstract**

According to one approach, provided is an electrode (10) including an active material-containing layer (10b) containing an oxide active material and fibrous carbon. Luminance has periodical variance along a direction on a principal surface of the active material-containing layer (10b).

## Description

### FIELD

Approaches relate to an electrode, secondary battery, battery pack, and vehicle.

### BACKGROUND

Lithium ion batteries that are charged and discharged by lithium ions moving between a negative electrode and a positive electrode, for example, nonaqueous electrolyte batteries have been actively investigated as high energy density batteries.

A typical electrode of a secondary battery such as a lithium-ion battery contains, in addition to an electrode active material that contributes to charge and discharge by insertion and extraction of lithium ions being performed, an electro-conductive agent for increasing the electrical conductivity of the electrode. Carbon materials are widely used as electro-conductive agents incorporated into the electrode.

### BRIEF DESCRIPTION OF THE DRAWINGS

FIG. 1 is a cross-sectional view schematically showing an example of an electrode according to an approach.
FIG. 2 is a partially cut-out perspective view schematically showing an example of a secondary battery according to an approach.
FIG. 3 is an enlarged cross-sectional view of section A of the secondary battery shown in FIG. 2.
FIG. 4 is a perspective view schematically showing an example of a battery module according to an approach.
FIG. 5 is an exploded perspective view schematically showing an example of a battery pack according to an approach.
FIG. 6 is a block diagram showing an example of an electric circuit of the battery pack shown in FIG. 5.
FIG. 7 is a partially see-through diagram schematically showing an example of a vehicle according to an approach.
FIG. 8 is a diagram schematically showing an example of a control system related to an electric system in the vehicle according to an approach.

### DETAILED DESCRIPTION

According to one approach, provided is an electrode including an active material-containing layer containing an oxide active material and fibrous carbon. Luminance has periodical variance along a direction on a principal surface of the active material-containing layer.

According to another approach, provided is a secondary battery including a positive electrode, a negative electrode, and an electrolyte. The negative electrode includes the electrode according to the above approach.

According to another approach, provided is a battery pack including the secondary battery according to the above approach.

According to another approach, provided is a vehicle including the battery pack according to the above approach.

The above approaches can provide an electrode with which batteries can be produced in high yield and that can provide a secondary battery and battery pack with high rate performance, a secondary battery and battery pack with high rate performance, and a vehicle equipped with the battery pack.

In order to obtain a low-resistance electrode, a large amount of carbon material such as granular carbon or fibrous carbon is generally added. However, as a result of excessive addition of carbon material, there has been a tendency that the number of sites where the carbon material is aggregated in the electrode increases. Dispersion of fibrous carbon is particularly difficult. The rate performance of a battery has been limited due to vacancies within the electrode being blocked by the aggregated carbon material. On the contrary, in a case where the amount of the carbon material added is small, the electrical conductivity of the electrode cannot be sufficiently secured, and the electrical resistance increases.

In addition, electrostatic adsorption between electrostatically charged electrodes is a factor that reduces the efficiency of production using the electrodes. For example, after preparation of electrodes themselves, the electrodes may be transferred to a production site, at which a battery is formed in combination with other members in the battery, in a state where the electrodes are stacked, and then the electrodes may be conveyed one by one into a manufacturing apparatus. Electrostatic adsorption may occur between the stacked electrodes, and conveyance failure may occur.

Hereinafter, approaches will be described with reference to the drawings. The same reference signs are applied to common components throughout the approaches and overlapping explanations are omitted. Each drawing is a schematic view for explaining the approach and promoting understanding thereof; though there may be differences in shape, size and ratio from those in an actual device, such specifics can be appropriately changed in design taking the following explanations and known technology into consideration.

### (First Approach)

According to a first approach, an electrode is provided. The electrode includes an active material-containing layer containing an oxide active material and fibrous carbon. Luminance has periodical variance along a direction on a principal surface of the active material-containing layer.

The electrode is, for example, one for a secondary battery. The secondary battery in which the electrode is used may be a lithium secondary battery, for example, a nonaqueous electrolyte secondary battery containing a nonaqueous electrolyte. In addition, the electrode includes an electrode hoop (roll) before cutting, in addition to an electrode cut to a size suitable for being incorporated into the battery. Alternatively, the electrode may be an electrode that had already been incorporated in the battery then taken out from the disassembled battery.

In the electrode, the fibrous carbon is somewhat aggregated on the principal surface of the active material-containing layer, that is, an electrode surface, but is distributed in an even orientation. Thereby, an electrically conductive path in at least one direction along the principal surface of the active material-containing layer is secured. Therefore, the electrode can exhibit high rate performance, and an increase in electrical resistance in the electrode is suppressed.

In addition, since the fibrous carbon is distributed not entirely uniform, but in a periodic patchy pattern, it is possible to obtain an effect of suppressing electrostatic adsorption that causes conveyance failure in a case where electrodes are stacked. Specifically, electrostatic adsorption can be prevented by releasing charges accumulated on the surface of the active material-containing layer through the carbon distributed in a patchy pattern. Here, the patchy distribution is not limited to the patchy pattern, and includes other periodic arrangements such as an island-like distribution and a stripe pattern.

Specifically, the carbon has localized distribution with a period of 1 mm to 10 mm in at least one direction on the principal surface of the active material-containing layer. Many oxide active materials including titanium-containing oxides are white in a state in which lithium is not inserted. In contrast, carbon is black. Therefore, in the active material-containing layer in a state in which lithium is not inserted into the oxide active material, the correlation between the dispersion state of the oxide active material and carbon and the luminance of the surface of the active material-containing layer is high. That is, in the active material-containing layer, a portion where carbon is present in a large amount on the oxide active material has low luminance, and a portion where carbon is present in a small amount on the oxide active material has high luminance. Therefore, regarding a periodic variance in the luminance in at least one direction on the principal surface of the active material-containing layer, referring to a period of a variation in the luminance as L(GV), the period of the variance in the luminance can be expressed as 1 mm ≤ L(GV) ≤ 10 mm. Although details will be described later, the period L(GV) of the variation in the luminance is obtained by performing Fourier transform on the variation in the luminance obtained from the moving average of the variance in the luminance in a given direction obtained by image analysis on the principal surface of the active material-containing layer. Further, in a case where the amplitude of the luminance is greater than or equal to 0.3 cd/m² within the range of 1 mm ≤ L(GV) ≤ 10 mm, it can be determined that there is periodicity in the variation in the luminance. Here, one period of the variation in the luminance refers to a case where one minimum value and one maximum value are observed in the luminance, that is, a case where the electrode surface becomes black once and then becomes white.

The electrode may further include a current collector. The active material-containing layer may be formed on both of obverse and reverse surfaces or one surface of the current collector. The active material-containing layer contains the oxide active material and the fibrous carbon as an electro-conductive agent. The active material-containing layer may optionally include another electro-conductive agent and a binder.

As the oxide active material, an oxide capable of having lithium ions (Li⁺) be inserted and extracted is desirably used. The active material-containing layer may include one species of oxide active material. Alternatively, the active material-containing layer may include two or more species of oxide active materials. The oxide active material preferably includes a titanium-containing oxide.

Examples of titanium-containing oxides include lithium titanate having a ramsdellite structure (e.g., Li₂,_{y}Ti₃O₇, 0 ≤ y ≤ 3), lithium titanate having a spinel structure (e.g., Li₄₊ₓTi₅Oₗ₂, 0 ≤ x ≤ 3), titanium dioxide (TiO₂), anatase titanium dioxide, rutile titanium dioxide, hollandite titanium composite oxide, orthorhombic titanium composite oxides, and monoclinic niobium titanium oxides. Examples of other oxide active materials include niobium pentoxide (Nb₂O₅).

Examples of the orthorhombic titanium-containing composite oxide include a compound represented by Li₂₊ₐM^{I}_{2-b}Ti_{6-c}M^{II}_{d}O_{14+σ}. Here, M^{I} is at least one selected from the group consisting of Sr, Ba, Ca, Mg, Na, Cs, Rb and K. M^{II} is at least one selected from the group consisting of Zr, Sn, V, Nb, Ta, Mo, W, Y, Fe, Co, Cr, Mn, Ni and Al. The respective subscripts in the composition formula are specified as follows: 0 ≤ a ≤ 6, 0 ≤ b < 2, 0 ≤ c < 6, 0 ≤ d < 6, and -0.5 ≤ σ ≤ 0.5. Specific examples of the orthorhombic titanium-containing composite oxide include Li₂₊ₐNa₂TiₑO₁₄ (0 ≤ a ≤ 6).

Examples of the monoclinic niobium titanium oxide include a compound represented by LiₓTi_{1-y}Ml_{y}Nb_{2-z}M2_{z}O_{7+δ}. Here, M1 is at least one selected from the group consisting of Zr, Si, and Sn. M2 is at least one selected from the group consisting of V, Ta, and Bi. The respective subscripts in the composition formula are specified as follows: 0 ≤ x ≤ 5, 0 ≤ y < 1, 0 ≤ z < 2, and - 0.3 ≤ δ ≤ 0.3. Specific examples of the monoclinic niobium titanium composite oxide include LiₓNb₂TiO₇ (0 ≤ x ≤ 5).

Another example of the monoclinic niobium titanium oxide is a compound represented by LiₓTi_{1-y}M3_{y+z}Nb_{2-z}O_{7.δ}. Here, M3 is at least one selected from the group consisting of Mg, Fe, Ni, Co, W, Ta, and Mo. The respective subscripts in the composition formula are specified as follows: 0 ≤ x < 5, 0 ≤ y < 1, 0 ≤ z < 2, and -0.3 ≤ δ ≤ 0.3.

The electro-conductive agent is blended in order to improve current collection performance and suppress contact resistance between the active material and the current collector. The electro-conductive agent contains at least fibrous carbon. The fibrous carbon is moderately aggregated in the active material-containing layer, and is unevenly distributed in a periodic patchy pattern. On one hand, with little aggregation of fibrous carbon where the uniformity of the carbon distribution is high, a patchy distribution is not obtained. On the other hand, with excessive aggregation of fibrous carbon, the periodicity of the carbon distribution is impaired.

Examples of the fibrous carbon include vapor grown carbon fiber (VGCF), carbon nanotubes such as single-walled carbon nanotubes (SWCNT) and few-walled carbon nanotubes (FWCNT), and carbon nanofibers. One of them may be contained as fibrous carbon, or two or more of them may be combined and contained as fibrous carbon.

The fibrous carbon may take a certain orientation within the active material-containing layer. Although details will be described later, for example, the active material-containing layer can be formed using a slurry containing an oxide active material, an electro-conductive agent, and the like. In a case where high shear is applied to the slurry, carbon having a high aspect ratio tends to be oriented in the shear direction. Therefore, by using fibrous carbon as an electro-conductive agent, an active material-containing layer in which carbon is unevenly distributed in a patchy pattern is easily formed. Carbon having a higher aspect ratio is preferably used because the carbon is more easily oriented in a case where shear is applied in the slurry as the aspect ratio is higher. Specifically, the fibrous carbon preferably has a fiber length greater than or equal to 10 µm and less than or equal to 100 µm. In addition, the fibrous carbon preferably has a fiber diameter less than or equal to 50 nm.

In addition to the fibrous carbon, another electro-conductive agent may be further contained in the active material-containing layer. Examples of the other electro-conductive agent include carbon black such as acetylene black and graphite. One of them may be used as the other electro-conductive agent, or two or more of them may be used in combination as the other electro-conductive agent. In a case where flaky graphite is contained, the graphite flake can have a distribution with a period longer than the period obtained by the fibrous carbon. However, since the graphite flake tends to have random variations in brightness, the amplitude of the luminance spectrum after the Fourier transform representing the intensity of periodicity becomes small. Therefore, the period L(GV) of the variation in the luminance mainly reflects the uneven distribution of the fibrous carbon.

The blending ratio of the electro-conductive agent in the active material-containing layer is preferably greater than or equal to 0.1 parts by mass and less than or equal to 20 parts by mass based on 100 parts by mass of the oxide active material. On one hand, in a case where the amount of the electro-conductive agent is greater than or equal to 0.1 parts by mass based on 100 parts by mass of the oxide active material, the current collection performance of the active material-containing layer can be improved. On the other hand, it is preferable to set the amount of the electro-conductive agent to be less than or equal to 20 parts by mass based on 100 parts by mass of the oxide active material in order to increase the capacity. In a case where the amount of the electro-conductive agent is less than or equal to 20 parts by mass, the amount of the electro-conductive agent based on 100 parts by mass of the oxide active material is not excessive, and the periodicity of the carbon distribution in the active material-containing layer can be maintained. Of the electro-conductive agent, the fibrous carbon is preferably contained in an amount greater than or equal to 0.1 parts by mass and less than or equal to 5 parts by mass based on 100 parts by mass of the oxide active material.

The binder is added to fill gaps among the dispersed oxide active material and also to bind the oxide active material with the current collector. Examples of the binder include polytetrafluoroethylene (PTFE), polyvinylidene fluoride (PVdF), fluororubber, styrene-butadiene rubber, polyacrylate compounds, imide compounds, carboxymethyl cellulose (CMC), and salts of CMC. One of these may be used as the binder, or alternatively, two or more may be used in combination as the binder. Note, that styrene-butadiene rubber, CMC, and salts of CMC may also function as a thickener. The blending proportion of the binder in the active material-containing layer is preferably 2 parts by mass or more and 44 parts by mass or less based on 100 parts by mass of the oxide active material. On one hand, when the amount of binder relative to 100 parts by mass of the oxide active material is 2 parts by mass or more, binding between the active material-containing layer and current collector is sufficient, whereby excellent cycling performances can be expected. On the other hand, the amount of the binder relative to 100 parts by mass of the oxide active material is preferably kept to 44 parts by mass or less, in view of increasing the capacity.

There may be used for the current collector, a material which is electrochemically stable at the potential (vs. Li/Li⁺) at which lithium (Li) is inserted into and extracted from the oxide active material. For example, in the case where the oxide active material is used as a negative electrode active material, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably from 5 µm to 20 µm. The current collector having such a thickness can maintain balance between the strength and weight reduction of the electrode.

The current collector may include a portion where the active material-containing layer is not formed on a surface thereof. This portion may serve as a current collecting tab.

Next, the electrode according to the approach will be described more specifically with reference to the drawings.

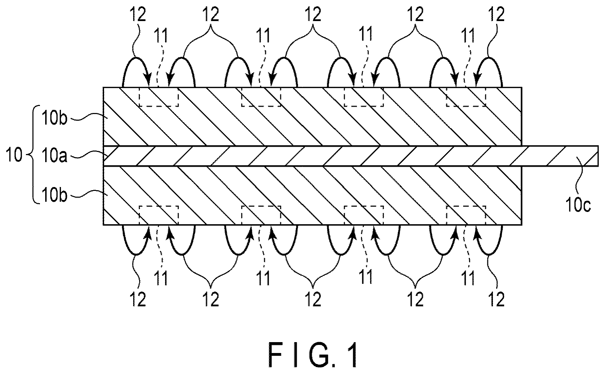

FIG. 1 is a cross-sectional view schematically illustrating an example of the electrode. The electrode 10 illustrated in FIG. 1 includes a current collector 10a and an active material-containing layer 10b supported on both surfaces of the current collector 10a. The current collector 10a includes a portion on one side thereof where the active material-containing layer 10b is not supported on any of the surfaces. This portion serves as a current-collecting tab 10c.

In FIG. 1, broken lines indicate carbon concentrated portions 11 to which the fibrous carbon is periodically unevenly distributed on a principal surface of the active material-containing layer 10b on both sides of the electrode 10. In addition, each arrow indicates charge transfer 12 on each principal surface. As illustrated in the drawing, charges accumulated on the principal surface of the active material-containing layer 10b are released through the carbon concentrated portions 11. As a result, electrostatic adsorption between electrodes 10 is prevented, so that the yield of battery manufacturing can be improved. Note that, in FIG. 1, the arrows representing the charge transfers 12 are exaggerated for sake of ease of visual recognition, but a trajectory followed by charges is not limited to that illustrated by the arrows.

### <Manufacturing Method>

The electrode can be prepared, for example, by the following method. First, a slurry is prepared by suspending the oxide active material, the electro-conductive agent, and a binder in a solvent. A thickener or a dispersant may be optionally further added to the slurry. The binder may also function as a thickener. The slurry is applied onto one or both of the surfaces of the current collector. Next, the applied slurry is dried to obtain a stack of the active material-containing layer and the current collector. Thereafter, the stack is pressed. In this way, the electrode is prepared.

Here, by appropriately controlling conditions of the prepared slurry and conditions for applying the slurry onto the current collector, the periodicity can be exhibited in the carbon distribution.

In a case where the powder material, that is, the oxide active material, the carbon electro-conductive agent, and the binder are well wetted and dispersed in the slurry, the periodicity of the carbon distribution is low. Specifically, in a case where particles of the powder material are not aggregated, or in a case where a dispersant is used and the dispersant is adsorbed and stabilized on the surfaces of the particles, carbon is less likely to be localized. On the contrary, even if the amount of the aggregated oxide powder as the active material or aggregated carbon as the electro-conductive agent is too large, the periodicity is hardly observed in the carbon distribution. Such a state is caused by poor dispersion of the powder material in the slurry, and may occur in a case where the dispersion time or dispersion strength of the slurry is insufficient.

The orientation of the carbon electro-conductive agent in the slurry during the application onto the current collector also affects the exhibition of the periodicity of the carbon distribution in the obtained active material-containing layer. In a case where high shear is applied to the fibrous carbon in the slurry, the aggregate structure which had been stabilized breaks up, and the fibrous carbon is easily oriented in the shear direction. The breakage of the aggregate structure may show a periodic change in a case where the internal structure is broken in stages. The breakage of the aggregate structure may or may not occur even in a case where the same shear is applied. Occurrence and lack of the structural breakage in such a manner exhibit periodic behavior. For example, the aggregate structure is likely to break in a region near a wall surface of a die head where strong shear is applied, resulting in the orientation of the fibrous carbon on an electrode application surface. This leads to a periodic change in the amount of carbon on the electrode surface, and thus a periodic change in the luminance.

By using the composition of the slurry and the condition for applying the slurry that lead to behaviors such as aggregation and orientation of the fibrous carbon described above, it is possible to cause a periodic variation in the amount of carbon on the electrode surface. Specifically, in a case where fibrous carbon having a long fiber length is used, there is a tendency that the amplitude of the amount of the carbon is widened and the periodicity is easily exhibited. In a case where the amount of the fibrous carbon added is appropriately increased, the periodicity is easily exhibited, and for example, it is preferable to add 0.1 parts by mass to 5 parts by mass of the fibrous carbon based on 100 parts by mass of the oxide active material. Also by adjusting the solid content of the slurry to be high, using a low molecular weight thickener, the periodicity is easily exhibited. For example, a slurry with a solid content (non-volatile content; NV) greater than or equal to 60% is prepared. In addition, the use of a dispersant that promotes the aggregation of the electro-conductive agent or active material makes it easier to cause the periodicity to be exhibited. Further, in a case where the shim thickness of the die head used for applying the slurry is reduced, the shear to the slurry increases. In addition, by increasing the speed for conveying the current collector onto which the slurry is applied, the thickness of an applied film of the slurry decreases, also in which case, the shear to the slurry increases. As a result, as described above, the orientation of the fibrous carbon becomes strong, and the periodicity is easily exhibited. In addition, in a case where the slurry is left to stand for a long time after the powder material in the slurry is dispersed, the fibrous carbon may be somewhat reaggregated. In a case where shear is applied to the appropriately reaggregated fibrous carbon, the obtained electrode may have a higher degree of orientation of the fibrous carbon.

### <Measurement Method>

Next, a method of measuring the variation in the luminance on the principal surface of the active material-containing layer and a method of measuring the active material will be described.

The electrode to be measured may be, for example, an electrode cut to a size suitable for incorporation into a battery, or an electrode hoop (roll) before cutting. An electrode already incorporated in a battery may be taken out from the battery and measured.

### Measurement of Luminance

The variation in the luminance on the principal surface of the active material-containing layer can be measured, as follows.

First, the active material included in the electrode is put in a state in which lithium ions are completely extracted therefrom. For example, when the electrode is used as the negative electrode of a battery, the battery is put into a completely-discharged state. For example, the discharged state of the battery can be achieved by repeating several times a discharging of the battery in a 25°C environment at 0.1 C current until a rated end voltage is reached or until the battery voltage becomes 1.0 V, so as to make the current value during discharge be 1/100 or lower than the rated capacity. Next, the battery is disassembled in a glove box filled with argon, and the electrode is taken out and washed with an appropriate solvent. For example, ethyl methyl carbonate may be used as an appropriate solvent. The washed electrode is dried, and used as the measurement sample.

The prepared electrode sample is subjected to luminance line analysis using image analysis software. As the image analysis software, for example, ImageJ shown in Non-Patent Literature, Dr. Michael et al., Image Processing with ImageJ, Biophotonics International, July 2004 issue, can be used.

First, luminance on any non-discriminatory line is acquired from image data obtained by photographing the principal surface of the active material-containing layer. It is preferable to use, as the image data, image data that is not very affected by unevenness of luminance from a light source and having a size of 5 cm x 5 cm. If the size is too small, average information is insufficient, and if the size is too large, pixels are insufficient with respect to a target period width. With respect to variance in the acquired luminance along the line, twenty adjacent moving averages are obtained and used as a background. The reason for using the moving averages is to remove noise that a light source exerts on luminance at the time of photographing the original image. A difference between a luminance value at each measurement point and the background is calculated. Fast Fourier transform is performed on luminance data on a line from which the background has been removed to obtain a normalized amplitude at each frequency.

The axial direction of the line analysis is desirably taken in a direction intersecting the application direction of the slurry at the time of preparing the electrode or a direction along the application direction on the principal surface of the active material-containing layer. The axial direction of the line analysis is preferably a direction perpendicular or parallel to the application direction of the slurry. This is because the effect of the breakage of the aggregate structure of the slurry is suggested in a case where a periodic change in the luminance of the electrode surface is perpendicular to the application direction of the slurry, and the effect of the orientation of the fibrous electro-conductive agent is suggested in a case where the periodic change is parallel to the application direction. For example, for a rectangular electrode, a line is set in a direction along any of four sides of the electrode.

### Measurement of Active Material

The crystal structure of the active material can be examined, for example, by combining powder X-ray diffraction (XRD) measurement and analysis by the Rietveld method. The composition of the active material can be analyzed using Inductively Coupled Plasma (ICP) emission spectrometry, for example.

The powder X-ray diffraction measurement of the active material can be performed, for example, as follows.

First, lithium ions are completely extracted from the active material (for example, titanium-containing oxide) included in the electrode. For example, when the electrode is used for a negative electrode for a battery, the battery is put in a fully discharged state using the conditions described above. Thereby, the crystal's condition for the active material can be observed. Remaining lithium ions may be present even in the discharged state. Due to the influence of the lithium ions remaining in the electrode, impurity phases like lithium carbonate and lithium fluoride may be mixed into the powder X-ray diffraction measurement results. The contamination by the impurity phases can be prevented, for example, by setting the measurement atmosphere to be an inert gas atmosphere or washing the surface of the electrode. Even if the impurity phases are present, analysis can be carried out disregarding those phases in the case of XRD.

Next, the battery is dismantled in a glove box filled with argon, and an electrode is taken out. The taken-out electrode is washed with an appropriate solvent. For example, ethyl methyl carbonate or the like can be used. The washed electrode is cut into an area almost equal to the area of the holder of the powder X-ray diffractometer to obtain a measurement sample.

The cut sample (electrode) is directly affixed to the glass holder for measurement. In this case, the position of a peak derived from the current collector is measured in advance. The peaks of other components such as an electro-conductive agent and a binder are also measured in advance. When the peaks of the current collector and active material overlap, the layer containing the active material-containing layer is desirably removed from the current collector, and subjected to measurement. This is to separate the overlapping peaks when quantitatively measuring the peak intensity. For example, the active material-containing layer can be dislodged by irradiating the electrode substrate with an ultrasonic wave in a solvent. The active material-containing layer is sealed in a capillary and measured on a rotatory sample table. By such a method, an XRD pattern of the active material can be obtained with effects due to orientation diminished. The XRD pattern obtained by this method should be one applicable to Rietveld analysis. In order to collect data for the Rietveld, a step width is set to 1/3 to 1/5 of the minimum half width of diffraction peaks, and a measurement time and/or X-ray intensity are appropriately adjusted so that the intensity at the peak position of highest reflected intensity is 10,000 counts.

The obtained XRD pattern is analyzed by the Rietveld method. In the Rietveld method, a diffraction pattern is calculated from a crystal structure model which has been previously estimated. Parameters (lattice constants, atomic coordinates, occupancy and the like) related to the crystal structure can be precisely analyzed by fitting all the calculated values and measured values. As a result, the characteristics of the crystal structure of the synthesized oxide can be examined. The occupancies in the sites of the respective constitutional elements can be examined, as well.

Method of Examining Composition of Active Material The composition of the active material can be analyzed using inductively coupled plasma (ICP) emission spectrometry, for example. At this time, the abundance ratio (molar ratio) of each element depends on the sensitivity of an analyzing apparatus to be used. Therefore, the measured molar ratio may deviate from the actual molar ratio by an error of the measurement apparatus. However, even when the numerical value deviates from the actual value and falls within the error range of the analyzing apparatus, the performance of the electrode according to the approach can still be sufficiently exhibited.

In order to measure the composition of the active material included in an electrode according to ICP emission spectrometry, the following procedure is specifically performed.

In the case where the electrode to be measured is incorporated in a battery, according to the procedure described in the section of powder X-ray diffraction, the electrode is taken out from the battery, and washed.

The active material-containing layer is removed from the electrode. For example, the active material-containing layer can be dislodged by irradiation with an ultrasonic wave. As a specific example, for example, the active material-containing layer can be taken off from the current collector by placing the electrode in ethyl methyl carbonate placed in a glass beaker and vibrating the electrode in an ultrasonic washer.

Next, the removed portion is heated in air for a short time (for example, about 1 hour at 500°C) to burn off unnecessary components such as binder components and electro-conductive agents. By dissolving this residue with an acid, a liquid sample containing the active material can be produced. At this time, hydrochloric acid, nitric acid, sulfuric acid, and hydrogen fluoride and the like can be used as the acid. The composition in the active material can be known by subjecting the liquid sample to ICP analysis.

The electrode according to the first approach includes an active material-containing layer that contains an oxide active material and fibrous carbon, and luminance along a direction on a principal surface of the active material-containing layer has periodical variance. Therefore, the electrode can enhance the yield in electrode production, and can provide a secondary battery with high rate performance.

### (Second Approach)

According to a second approach, there is provided a secondary battery including a negative electrode, a positive electrode, and an electrolyte. As the negative electrode, the secondary battery includes the electrode according to the first approach.

The secondary battery may further include a separator provided between the positive electrode and the negative electrode. The negative electrode, the positive electrode, and the separator may configure an electrode group. The electrolyte may be held in the electrode group.

The secondary battery may further include a container member that houses the electrode group and the electrolyte.

The secondary battery may further include a negative electrode terminal electrically connected to the negative electrode and a positive electrode terminal electrically connected to the positive electrode.

The secondary battery may be, for example, a lithium secondary battery. The secondary battery also includes nonaqueous electrolyte secondary batteries including nonaqueous electrolyte(s).

Hereinafter, the negative electrode, positive electrode, electrolyte, separator, container member, negative electrode terminal, and positive electrode terminal will be described in detail.

### 1) Negative Electrode

The negative electrode may include a negative electrode current collector and a negative electrode active material-containing layer. The negative electrode current collector and the negative electrode active material-containing layer may respectively be the current collector and active material-containing layer that may be included in the electrode according to the first approach.

Of the details of the negative electrode, portions that overlap with the details described in the first approach are omitted.

The density of the negative electrode active material-containing layer (excluding the current collector) is preferably from 1.8 g/cm³ to 2.8 g/cm³. The negative electrode having the density of the negative electrode active material-containing layer within this range is excellent in energy density and ability of holding the electrolyte. The density of the negative electrode active material-containing layer is more preferably from 2.1 g/cm³ to 2.6 g/cm³.

### 2) Positive Electrode

The positive electrode may include a positive electrode current collector and a positive electrode active material-containing layer. The positive electrode active material-containing layer may be formed on one surface or both of obverse and reverse surfaces of the positive electrode current collector. The positive electrode active material-containing layer may include a positive electrode active material, and optionally an electro-conductive agent and a binder.

As the positive electrode active material, for example, an oxide or a sulfide may be used. The positive electrode may singly include one species of compound as the positive electrode active material, or alternatively, include two or more species of compounds in combination. Examples of the oxide and sulfide include compounds capable of having Li and Li ions be inserted and extracted.

Examples of such compounds include manganese dioxide (MnO₂), iron oxides, copper oxides, nickel oxides, lithium manganese composite oxides (e.g., LiₓMn₂O₄ or LiₓMnO₂; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese cobalt composite oxides (e.g., LiₓMn_{y}Co_{1-y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium phosphates having an olivine structure (e.g., LiₓFePO₄; 0 < x ≤ 1, LiₓFe_{1-y}Mn_{y}PO₄; 0 < x ≤ 1, 0 < y ≤ 1, and LiₓCoPO₄; 0 < x ≤ 1), iron sulfate (Fe₂(SO₄)₃), vanadium oxides (e.g., V₂O₅) , and lithium nickel cobalt manganese composite oxide (LiₓNi_{1-y-z}Co_{y}Mn_{z}O₂; 0 < x ≤ 1, 0 < y < 1, 0 < z < 1, y + z < 1).

Among the above, examples of compounds more preferable as the positive electrode active material include lithium manganese composite oxides having a spinel structure (e.g., LiₓMn₂O₄; 0 < x ≤ 1), lithium nickel composite oxides (e.g., LiₓNiO₂; 0 < x ≤ 1), lithium cobalt composite oxides (e.g., LiₓCoO₂; 0 < x ≤ 1), lithium nickel cobalt composite oxides (e.g., LiₓNi_{1-y}Co_{y}O₂; 0 < x ≤ 1, 0 < y < 1), lithium manganese nickel composite oxides having a spinel structure (e.g., LiₓMn_{2-y}Ni_{y}O₄; 0 < x ≤ 1, 0 < y < 2), lithium manganese cobalt composite oxide (e.g., LiₓMn_{y}Co_{1-y}O₂; 0 < x ≤ 1, 0 < y < 1), lithium iron phosphates (e.g., LiₓFePO₄; 0 < x ≤ 1), and lithium nickel cobalt manganese composite oxides (LiₓNi_{1-y-z}Co_{y}Mn_{z}O₂; 0 < x ≤ 1, 0 < y < 1, 0 < z < 1, y + z < 1). The positive electrode potential can be made high by using these positive electrode active materials.

When an ambient temperature molten salt is used as the electrolyte of the battery, it is preferable to use a positive electrode active material including lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with ambient temperature molten salts, cycle life can be improved. Details regarding the ambient temperature molten salt are described later.

The primary particle diameter of the positive electrode active material is preferably from 100 nm to 1 µm. The positive electrode active material having a primary particle size of 100 nm or more is easy to handle during industrial production. In the positive electrode active material having a primary particle size of 1 µm or less, in-solid diffusion of lithium ions can proceed smoothly.

The specific surface area of the positive electrode active material is preferably from 0.1 m²/g to 10 m²/g. With the positive electrode active material having a specific surface area of 0.1 m²/g or more, sufficient sites for inserting and extracting Li ions can be secured. The positive electrode active material having a specific surface area of 10 m²/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluororubber, polyacrylate compounds, imide compounds, carboxymethyl cellulose (CMC), and salts of CMC. One of these may be used as the binder, or alternatively, two or more may be used in combination as the binder.

The electro-conductive agent is added to improve current collection performance and to suppress the contact resistance between the positive electrode active material and the positive electrode current collector. Examples of electro-conductive agent include carbonaceous substances such as vapor grown carbon fiber (VGCF), carbon black such as acetylene black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, decomposition of electrolyte can be reduced during storage under high temperatures.

The positive electrode current collector is preferably an aluminum foil, or an aluminum alloy foil containing one or more selected from the group consisting of Mg, Ti, Zn, Ni, Cr, Mn, Fe, Cu, and Si.

The thickness of the aluminum foil or aluminum alloy foil is preferably from 5 µm to 20 µm, and more preferably 15 µm or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector may include a portion where a positive electrode active material-containing layer is not formed on a surface thereof. This portion may serve as a positive electrode current collecting tab.

The positive electrode may be fabricated by the following method, for example. First, positive electrode active material, electro-conductive agent, and binder are suspended in a solvent to prepare a slurry. The slurry is applied onto one surface or both of obverse and reverse surfaces of a current collector. Next, the applied slurry is dried so as to obtain a stack of positive electrode active material-containing layer and current collector. Then, the stack is subjected to pressing. The positive electrode can be fabricated in this manner.

Alternatively, the positive electrode may also be fabricated by the following method. First, positive electrode active material, electro-conductive agent, and binder are mixed to obtain a mixture. Next, the mixture is formed into pellets. Then the positive electrode can be obtained by arranging the pellets onto the current collector.

### 3) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. The concentration of electrolyte salt is preferably from 0.5 mol/L to 2.5 mol/L.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), lithium bistrifluoromethylsulfonylimide (LiN(CF₃SO₂)₂), and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX); linear ethers such as dimethoxy ethane (DME) and diethoxy ethane (DEE); γ-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15°C to 25°C). The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. Having Li ion conductivity, as referred to herein, indicates exhibiting a lithium ion conductivity of 1 × 10⁻⁶ S/cm or more at 25°C. Examples of the inorganic solid electrolyte include oxide solid electrolytes and sulfide solid electrolytes. Specific examples of the inorganic solid electrolyte are described below.

Preferably used as the oxide solid electrolyte is a lithium phosphate solid electrolyte having a NASICON (Sodium (Na) Super Ionic Conductor) structure represented by a general formula Li₁₊ₓMα₂ (PO₄)₃. Mα in the above general formula is, for example, one or more selected from the group consisting of titanium (Ti), germanium (Ge), strontium (Sr), zirconium (Zr), tin (Sn), aluminum (Al), and calcium (Ca). The subscript x is within the range of 0 ≤ x ≤ 2.

Specific examples of the lithium phosphate solid electrolyte having the NASICON structure include a LATP compound represented by Li₁₊ₓAlₓTi₂₋ₓ(PO₄)₃ where 0.1 ≤ x ≤ 0.5; a compound represented by Li₁₊ₓAl_{y}Mβ_{2-y}(PO₄)₃ where Mβ is one or more selected from the group consisting of Ti, Ge, Sr, Zr, Sn, and Ca, 0 ≤ x ≤ 1, and 0 ≤ y ≤ 1; a compound represented by Li₁₊ₓAlₓGe₂₋ₓ(PO₄)₃ where 0 ≤ x ≤ 2; a compound represented by Li₁₊ₓAlₓZr₂₋ₓ(PO₄)₃ where 0 ≤ x ≤ 2; a compound represented by Li_{1+x+y}AlₓM_{γ2-x}Si_{y}P_{3-y}O₁₂ where Mγ is one or more selected from the group consisting of Ti and Ge, 0 < x ≤ 2, and 0 ≤ y < 3; and a compound represented by Li₁₊₂ₓZr₁₋ₓCaₓ(PO₄)₃ where 0 ≤ x < 1.

In addition to the above lithium phosphate solid electrolyte, examples of the oxide solid electrolyte include amorphous LIPON compounds represented by LiₓPO_{y}N_{z} where 2.6 ≤ x ≤ 3.5, 1.9 ≤ y ≤ 3.8, and 0.1 ≤ z ≤ 1.3 (e.g., Li_{2.9}PO_{3.3}N_{0.46}); a compound having a garnet structure represented by La₅₊ₓAₓLa₃₋ₓMδ₂O₁₂ where A is one or more selected from the group consisting of Ca, Sr, and Ba, Mδ is one or more selected from the group consisting of Nb and Ta, and 0 ≤ x ≤ 0.5; a compound represented by Li₃Mδ₂₋ₓL₂O₁₂ where Mδ is one or more selected from the group consisting of Nb and Ta, L may include Zr, and 0 ≤ x ≤ 0.5; a compound represented by Li₇₋₃ₓAlₓLa₃Zr₃O₁₂ where 0 ≤ x ≤ 0.5; a LLZ compound represented by Li₅₊ₓLa₃Mδ₂₋ₓZrₓO₁₂ where Mδ is one or more selected from the group consisting of Nb and Ta, and 0 ≤ x ≤ 2 (e.g., Li₇La₃Zr₂O₁₂); and a compound having a perovskite structure and represented by La_{2/3-x}LiₓTiO₃ where0.3 ≤ x ≤ 0.7.

One or more among the above compounds may be used as the solid electrolyte. Two or more of the above solid electrolytes may be used, as well.

### 4) Separator

The separator may be made of, for example, a porous film or synthetic resin nonwoven fabric including polyethylene (PE), polypropylene (PP), cellulose, or polyvinylidene fluoride (PVdF). In view of safety, a porous film made of polyethylene or polypropylene is preferred. This is because at a certain temperature, such a porous film melts and can thereby shut off current.

### 5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), prismatic, cylindrical, coin-shaped, or button-shaped. The container member may be appropriately selected depending on battery size and use of the battery.

### 6) Negative Electrode Terminal

The negative electrode terminal may be made of a material that is electrochemically stable at the Li insertion-extraction potential of the negative electrode active materials mentioned above, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance between the negative electrode terminal and the negative electrode current collector.

### 7) Positive Electrode Terminal

The positive electrode terminal may be made of, for example, a material that is electrically stable in the potential range of 3 V to 4.5 V (vs. Li/Li⁺) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

Next, the secondary battery according to the approach will be more concretely described with reference to the drawings.

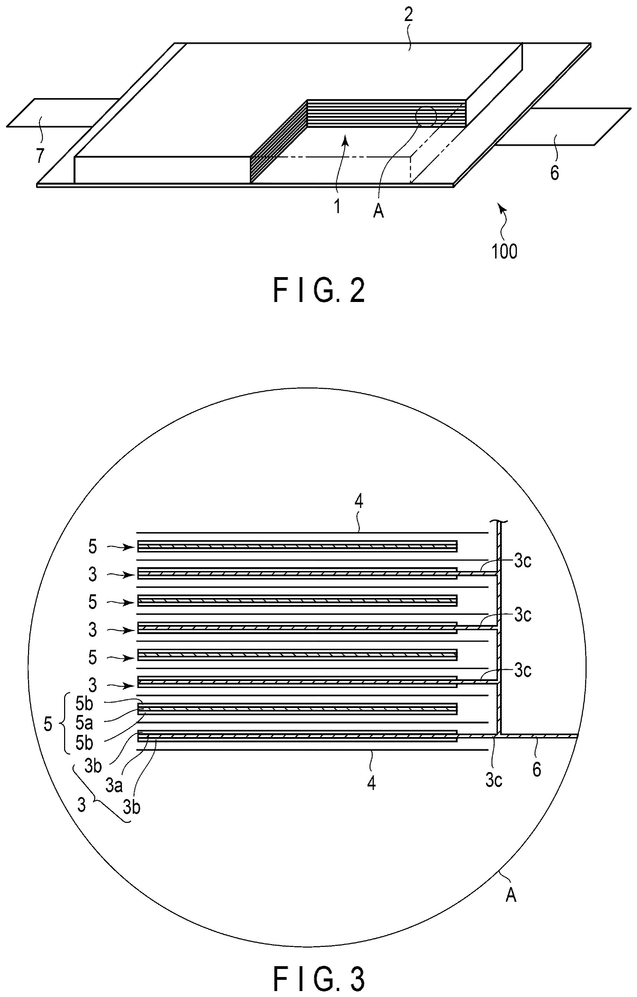

FIG. 2 is a partially cut-out perspective view schematically showing an example of the secondary battery. FIG. 3 is an enlarged cross-sectional view of section A of the secondary battery shown in FIG. 2.

The secondary battery 100 shown in FIGS. 2 and 3 includes an electrode group 1 shown in FIGS. 2 and 3, a container member 2 shown in FIG. 2, and an electrolyte, which is not shown. The electrode group 1 and electrolyte are housed in the container member 2. The electrolyte is held in the electrode group 1.

The container member 2 is made of a laminate film including two resin layers and a metal layer sandwiched between the resin layers.

As shown in FIG. 3, the electrode group 1 is a stacked electrode group. The stacked electrode group 1 has a structure in which negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces thereof.

The negative electrode current collector 3a of each of the negative electrodes 3 includes at one end, a portion where the negative electrode active material-containing layer 3b is not supported on either surface. This portion serves as a negative electrode current collecting tab 3c. As shown in FIG. 3, the negative electrode current collecting tabs 3c do not overlap the positive electrodes 5. The plural negative electrode current collecting tabs 3c are electrically connected to the strip-shaped negative electrode terminal 6. A tip of the strip-shaped negative electrode terminal 6 is drawn outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs 3c, the positive electrode current collecting tabs do not overlap the negative electrodes 3. Further, the positive electrode current collecting tabs are located on the opposite side of the electrode group 1 with respect to the negative electrode current collecting tabs 3c. The positive electrode current collecting tabs are electrically connected to the strip-shaped positive electrode terminal 7. A tip of the strip-shaped positive electrode terminal 7 is located on the opposite side relative to the negative electrode terminal 6 and drawn outside from the container member 2.

The secondary battery according to the second approach includes the electrode according to the first approach. Thus, the secondary battery can be produced in high yield, and the secondary battery can exhibit high rate performance.

### (Third Approach)

According to a third approach, a battery module is provided. The battery module includes plural of secondary batteries according to the second approach.

In the battery module, each of the single-batteries may be arranged to be electrically connected in series or in parallel, or may be arranged in combination of in-series connection and in-parallel connection.

An example of the battery module according to the approach will be described next, with reference to the drawings.

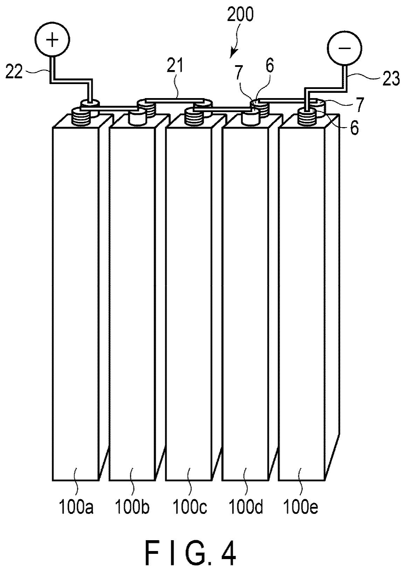

FIG. 4 is a perspective view schematically showing an example of the battery module. The battery module 200 shown in FIG. 4 includes five single-batteries 100a to 100e, four bus bars 21, a positive electrode-side lead 22, and a negative electrode-side lead 23. Each of the five single-batteries 100a to 100e is the secondary battery according to the second approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 4 is a battery module of five-in-series connection. Although no example is depicted in drawing, in a battery module including plural single-batteries that are electrically connected in parallel, for example, the plural single-batteries may be electrically connected by having plural negative electrode terminals being connected to each other by bus bars while having plural positive electrode terminals being connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the third approach includes the secondary battery according to the second approach. Therefore, the battery module can exhibit high rate performance.

### (Fourth Approach)

According to a fourth approach, a battery pack is provided. The battery pack includes a battery module according to the third approach. The battery pack may include a single secondary battery according to the second approach, in place of the battery module according to the third approach.

The battery pack may further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the secondary battery, and/or to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the approach will be described with reference to the drawings.

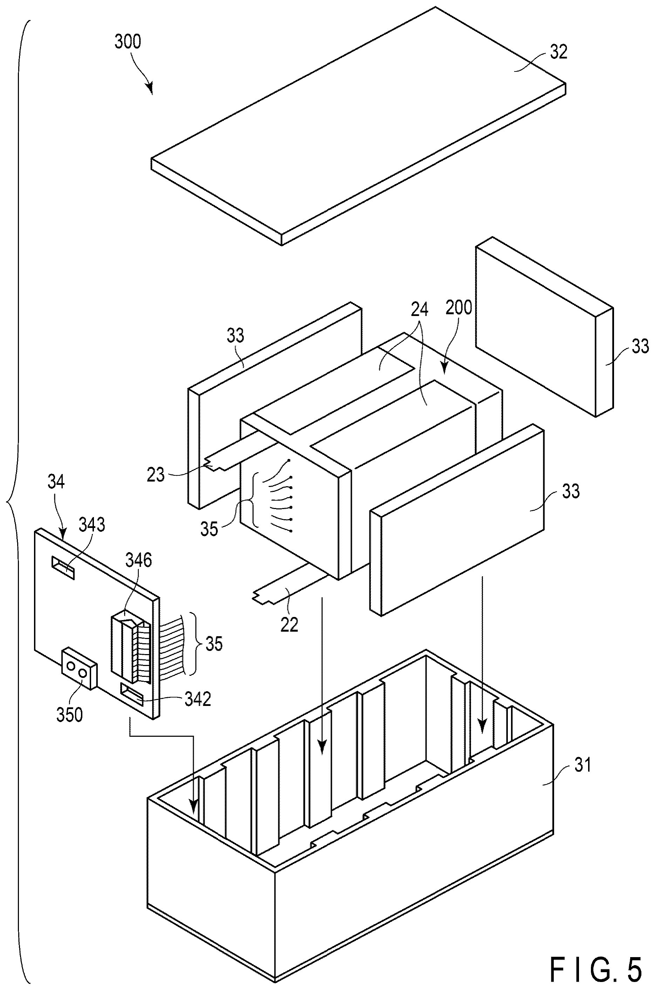

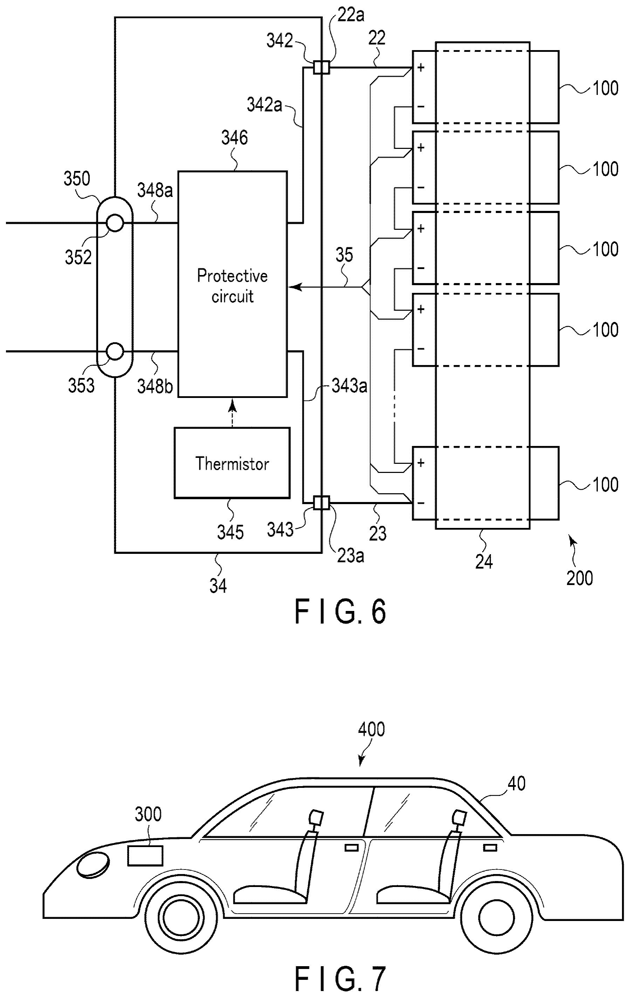

FIG. 5 is an exploded perspective view schematically showing an example of the battery pack. FIG. 6 is a block diagram showing an example of an electric circuit of the battery pack shown in FIG. 5.

A battery pack 300 shown in FIGS. 5 and 6 includes a housing container 31, a lid 32, protective sheets 33, a battery module 200, a printed wiring board 34, wires 35, and an insulating plate (not shown).

The housing container 31 shown in FIG. 5 is a prismatic bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tapes 24.

At least one of the plural single-batteries 100 is a secondary battery according to the second approach. The plural single-batteries 100 are electrically connected in series, as shown in FIG. 6. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tapes 24 fasten the plural single-batteries 100. The plural single-batteries 100 may be fixed using a heat shrinkable tape in place of the adhesive tapes 24. In this case, protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200. The one end of the positive electrode-side lead 22 is electrically connected to the positive electrode(s) of one or more single-battery 100. One end of the negative electrode-side lead 23 is connected to the battery module 200. The one end of the negative electrode-side lead 23 is electrically connected to the negative electrode(s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a surface of the battery module 200. An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device(s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery(s) 100. When detecting over charge or the like for each of the single batteries 100, the battery voltage may be detected, or a positive electrode potential or negative electrode potential may be detected. In the latter case, a lithium electrode to be used as a reference electrode may be inserted into each single-battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the fourth approach is provided with the secondary battery according to the second approach or the battery module according to the third approach. Accordingly, the battery pack can exhibit high rate performance.

### (Fifth Approach)

According to a fifth approach, a vehicle is provided. The battery pack according to the fourth approach is installed on this vehicle.

In the vehicle, the battery pack is configured, for example, to recover regenerative energy from motive force of the vehicle. The vehicle may include a mechanism (a regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

The installing position of the battery pack within the vehicle is not particularly limited. For example, when installing the battery pack on an automobile, the battery pack may be installed in the engine compartment of the automobile, in rear parts of the vehicle body, or under seats.

Plural battery packs may be installed in the vehicle. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle is explained below, with reference to the drawings.

FIG. 7 is a partially see-through diagram schematically showing an example of the vehicle.

A vehicle 400, shown in FIG. 7 includes a vehicle body 40 and a battery pack 300 according to the fourth approach. In the example shown in FIG. 7, the vehicle 400 is a four-wheeled automobile.

This vehicle 400 may have plural battery packs 300 installed therein. In such a case, the batteries (e.g., single-batteries or battery module) included in the battery packs 300 may be connected in series, connected in parallel, or connected in a combination of in-series connection and in-parallel connection.

In FIG. 7, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

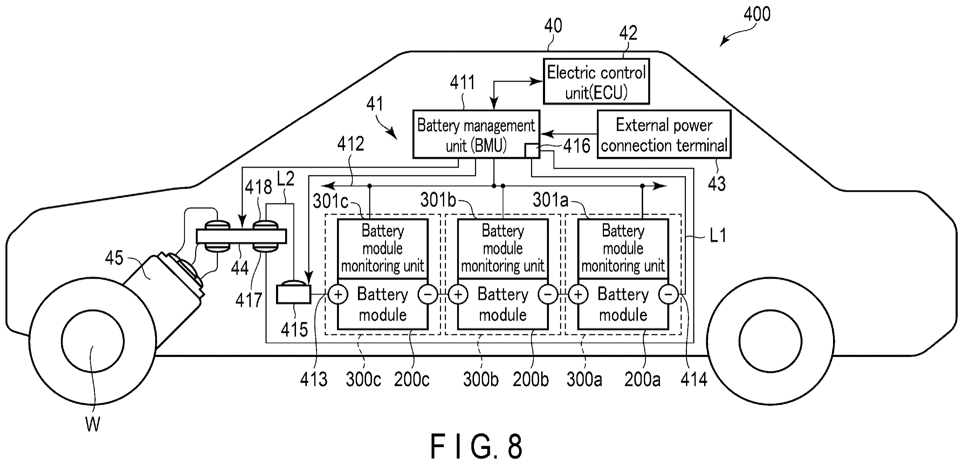

Next, with reference to FIG. 8, an aspect of operation of the vehicle according to the approach is explained.

FIG. 8 is a diagram schematically showing an example of a control system related to an electric system in the vehicle. A vehicle 400, shown in FIG. 8, is an electric automobile.

The vehicle 400, shown in FIG. 8, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 8, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the second approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In the communication bus 412, a set of communication lines is shared at multiple nodes (i.e., the battery management unit 411 and one or more battery module monitoring units 301a to 301c). The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 8) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements. The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the fifth approach is installed with the battery pack according to the fourth approach. Thus, a high performance vehicle can be provided.

### Examples

Examples will be described below.

### (Example 1)

A niobium-titanium oxide TiNb₂O₇ powder, carbon black, a carbon nanotube, carboxymethyl cellulose, and styrene-butadiene rubber (SBR) were dispersed and mixed in a water solvent at a weight ratio of 84:5:1:5:5 to prepare a slurry. The physical properties of the carbon nanotube used are shown in the following Table 1. A planetary mixer was used for the dispersion. First, the members other than the SBR were dispersed at a rotation speed of 50 rpm for 120 minutes, and then the SBR was added and dispersed at 20 rpm for 20 minutes to prepare the slurry.

Thereafter, the slurry was applied in an amount of 100 g/m² onto both surfaces of an aluminum foil current collector by application using a die head. A shim having a thickness of 0.3 mm was used for the die head, and the application was performed at a conveyance speed of 5 m/min. The applied slurry was dried, and the obtained stack was pressed.

In this manner, the electrode was prepared.

### (Example 2)

An electrode was prepared in the same manner as in Example 1 except that lithium titanate Li₄Ti₅O₁₂ was used instead as the active material.

### (Example 3)

An electrode was prepared in the same manner as in Example 1 except that titanium oxide TiO₂ was used instead as the negative electrode active material.

### (Examples 4 and 5)

Electrodes were prepared in the same manner as in Example 1 except that carbon nanotubes having different physical properties were used as shown in Table 1.

### (Examples 6 and 7)

Electrodes were prepared in the same manner as in Example 1 except that the amounts of carbon nanotubes added were changed as shown in Table 1.

### (Example 8)

An electrode was prepared in the same manner as in Example 1 except that the slurry was not immediately applied onto the current collector after being dispersed, and the slurry set aside for 30 days after the dispersion of the slurry was restirred with the planetary mixer at 20 rpm for 5 minutes and then applied onto the current collector.

### (Example 9)

An electrode was prepared in the same manner as in Example 1 except that the speed at which the aluminum foil current collector was conveyed was changed to 10 m/min in slurry application.

### (Example 10)

An electrode was prepared in the same manner as in Example 1 except that the thickness of the shim was changed to 0.1 mm in slurry application.

### (Comparative Example 1)

An electrode was prepared in the same manner as in Example 1 except that the carbon nanotube was not added.

### (Comparative Example 2)

An electrode was prepared in the same manner as in Example 1 except that the amount of the carbon nanotube added was changed as shown in Table 1.

### (Comparative Example 3)

An electrode was prepared in the same manner as in Example 1 except that a carbon nanotube having different physical properties was used as shown in Table 1.

### (Comparative Example 4)

An electrode was prepared in the same manner as in Example 1 except that the speed at which the aluminum foil current collector was conveyed was changed to 0.5 m/min in slurry application.

Table 1 summarizes the conditions for the electrode preparation in each example. Specifically, the table shows the oxide used as the active material, the physical properties of the carbon nanotube, the number of days from the slurry dispersion to the slurry application, the speed at which the current collector was conveyed during the slurry application, and the shim thickness.

**[Table 1]**

| | Active material | Physical properties and added amount of carbon nanotube | | | Number of days from slurry dispersion to slurry application (days) | Current collector conveyance speed (m/min) | Shim thickness (mm) |
|---|---|---|---|---|---|---|---|
| | | Average fiber diameter (nm) | Fiber length (µm) | Added amount (wt%) | | | |
| Example 1 | TiNb₂O₇ | 10 | 20 | 1 | 0 | 5 | 0.3 |
| Example 2 | Li₄Ti₅O₁₂ | 10 | 20 | 1 | 0 | 5 | 0.3 |
| Example 3 | TiO₂ | 10 | 20 | 1 | 0 | 5 | 0.3 |
| Example 4 | TiNb₂O₇ | 5 | 50 | 1 | 0 | 5 | 0.3 |
| Example 5 | TiNb₂O₇ | 2 | 80 | 1 | 0 | 5 | 0.3 |
| Example 6 | TiNb₂O₇ | 10 | 20 | 5 | 0 | 5 | 0.3 |
| Example 7 | TiNb₂O₇ | 10 | 20 | 0.5 | 0 | 5 | 0.3 |
| Example 8 | TiNb₂O₇ | 10 | 20 | 1 | 30 | 5 | 0.3 |
| Example 9 | TiNb₂O₇ | 10 | 20 | 1 | 0 | 10 | 0.3 |
| Example 10 | TiNb₂O₇ | 10 | 20 | 1 | 0 | 5 | 0.1 |
| Comparative Example 1 | TiNb₂O₇ | - | - | - | 0 | 5 | 0.3 |
| Comparative Example 2 | TiNb₂O₇ | 10 | 20 | 10 | 0 | 5 | 0.3 |
| Comparative Example 3 | TiNb₂O₇ | 200 | 10 | 1 | 0 | 5 | 0.3 |
| Comparative Example 4 | TiNb₂O₇ | 10 | 20 | 1 | 0 | 0.5 | 0.3 |

### <Evaluation>

For each of the electrodes obtained in the above- described examples, a 10 cm x 10 cm region on the principal surface of the active material-containing layer was photographed, and image analysis was performed by the method described above. Fast Fourier transform was performed on each of obtained spectra to obtain a normalized amplitude at each frequency corresponding to a width of 1 mm to 10 mm.

Further, a sample of 10 cm x 10 cm was cut out. The cut sample was placed on an insulating flat plate, and an electrical potential of an electrode surface was measured with a surface electrometer. Next, one additional 10 cm x 10 cm sample was prepared. The two electrode samples were stacked and sandwiched between Teflon (registered trademark) plates from both sides, and vibration was applied for 60 seconds. Thereafter, whether or not the lower electrode sample had become lifted when the overlaid upper electrode sample was lifted was visually examined. Electrostatic adsorption was determined to be "present" when the lower sample had been lifted, and electrostatic adsorption was determined to be "not present" when the lower sample had not been lifted.

Furthermore, one of the two active material-containing layers included in each of the obtained electrodes was peeled off from the current collector, and thereafter, the rest of the electrode was punched out into a circle of 14 mm φ. LiPF₆ was dissolved in a mixed solution of ethylene carbonate and diethyl carbonate to prepare a liquid nonaqueous electrolyte. The obtained circular electrode was used as a working electrode, metal Li was used as a counter electrode, and the liquid nonaqueous electrolyte was used as an electrolytic solution to prepare a 2032 type coin cell. In a voltage range of 3.0 V to 1.0 V, charge at a current value of 1 C and discharge at 0.2 C, and charge at 1 C and discharge at 10 C were performed. The discharge capacity was measured for each time of the discharge. The capacity during the discharge at 10 C relative to the capacity during the discharge at 0.2 C was calculated, and the 10 C/ 0.2 C capacity ratio was determined as an index for discharge rate performance of the coin cell.

The results of the above-described evaluations are shown in Table 2 below.

**[Table 2]**

| [Table 2] | Maximum amplitude of luminance within period of 1 mm to 10 mm (cd/m²) | Electrical potential at electrode surface (V) | Electrostatic adsorption between electrodes | 10C / 0.2C Capacity ratio (%) |
|---|---|---|---|---|
| Example 1 | 0.55 | 15 | Not present | 55 |
| Example 2 | 0.51 | 33 | Not present | 60 |
| Example 3 | 0.59 | 21 | Not present | 58 |
| Example 4 | 0. 61 | 2 | Not present | 50 |
| Example 5 | 0. 68 | 1 | Not present | 41 |
| Example 6 | 0.31 | 3 | Not present | 36 |
| Example 7 | 0.38 | 21 | Not present | 58 |
| Example 8 | 1.13 | 3 | Not present | 53 |
| Example 9 | 1.08 | 5 | Not present | 55 |
| Example 10 | 1.01 | 3 | Not present | 56 |
| Comparative Example 1 | 0.11 | 128 | Present | 25 |
| Comparative Example 2 | 0.12 | 11 | Not present | 12 |
| Comparative Example 3 | 0.15 | 76 | Present | 32 |
| Comparative Example 4 | 0.22 | 89 | Present | 56 |

As shown in Table 2, in each of the electrodes prepared in Examples 1 to 10, an amplitude greater than or equal to 0,3 cd/m² was confirmed in a variation in luminance within a period of 1mm to 10mm (1mm ≤ L (GV) ≤ 10mm) obtained by image analysis. From this, it was determined that periodicity was exhibited in the variation in the luminance in each of the electrodes of Examples 1 to 10. On the other hand, in each of the electrodes prepared in Comparative Examples 1 to 4, the amplitude of a variation in luminance was less than 0.3 cd/m² even for the maximum value. From this, it was determined that each of the electrodes of Comparative Examples 1 to 4 did not exhibit periodicity in the variation in the luminance.

In each of the electrodes of Examples 1 to 10 and the electrode of Comparative Example 2, the electrical potential at the surface was low, and electrostatic adsorption did not occur. On the other hand, in each of the electrodes of Comparative Examples 1, 3, and 4, the electrical potential at the surface was high, and electrostatic adsorption occurred. Regarding each of the electrodes of Examples 1 to 10, it can be seen that since the carbon distribution on the electrode surface had periodicity, charges on the electrode surface were able to be released, whereby electrostatic adsorption was prevented. Regarding the electrode of Comparative Example 2, although there was no periodicity in carbon distribution, electrostatic adsorption is presumed to not have occurred simply because the amount of electro-conductive agent was large. Regarding Comparative Example 1, it can be determined that the electrical potential of the electrode surface was the highest due to the absence of an electro-conductive agent, and electrostatic adsorption occurred due to accumulated charges. Regarding Comparative Examples 3 and 4, it can be determined that although an electro-conductive agent was appropriately contained, there was no periodicity in the carbon distribution, so that charges on the electrode surface had accumulated to cause electrostatic adsorption.

Coin cells using the electrodes of Examples 1 to 10 and the electrode of Comparative Example 4 respectively showed higher discharge rate performance than coin cells using the electrodes of the other Examples. In the coin cell using the electrode of Comparative Example 1, it can be determined that the battery resistance was high due to the fact that no electro-conductive agent was contained. Regarding the electrode of Comparative Example 2, it can be determined that although electrical conductivity was high, conduction of an electrolytic solution and lithium ions in the electrode was hindered by an excessive amount of the electro-conductive agent. For Comparative Example 3, it can be determined that although the same amount of carbon nanotube as that in Examples 1 to 10 was used as the electro-conductive agent, an electrically conductive path along the electrode surface could not be formed because a periodic distribution had not been obtained.

According to at least one approach and example described above, an electrode including an active material-containing layer is provided. The active material-containing layer contains an oxide active material and fibrous carbon. Luminance has periodical variance along a direction on a principal surface of the active material-containing layer. Battery production using the electrode is high in yield. The electrode can also provide a secondary battery and battery pack with high rate performance, and a vehicle including the battery pack.

While certain arrangements have been described, these arrangements have been presented by way of example only, and are not intended to limit the scope of the inventions. Indeed, the electrodes, secondary batteries, and the like described herein may be embodied in a variety of other forms; furthermore various omissions, substitutions and changes in the form of the apparatuses described herein may be made.

The present disclosure also encompasses the following approaches of electrodes:
1. An electrode comprising
   an active material-containing layer containing an oxide active material and fibrous carbon, wherein
   luminance has periodical variance along a direction on a principal surface of the active material-containing layer.
2. The electrode according to clause 1, wherein the periodic variance of the luminance in the direction on the principal surface of the active material-containing layer has a period in which an amplitude of the luminance is greater than or equal to 0.3 cd/m² within a range of 1 mm ≤ L(GV) ≤ 10 mm, where L(GV) is a period of variation in the luminance.
3. The electrode according to clause 1 or 2, wherein the fibrous carbon has a fiber length greater than or equal to 10 µm and less than or equal to 100 µm.
4. The electrode according to any one of clauses 1 to 3, wherein the oxide active material contains a titanium-containing oxide.
5. A secondary battery comprising:
   a positive electrode;
   a negative electrode; and
   an electrolyte,
   the negative electrode comprising the electrode according to any one of clauses 1 to 4.
6. A battery pack comprising the secondary battery according to clause 6.
7. The battery pack according to clause 6, further comprising:
   an external power distribution terminal; and
   a protective circuit.
8. The battery pack according to clause 6 or 7, comprising plural of the secondary battery, the secondary batteries being electrically connected in series, in parallel, or in combination of in-series connection and in-parallel connection.
9. A vehicle comprising the battery pack according to any one of clauses 6 to 8.
10. The vehicle according to clause 9, wherein the vehicle comprises a mechanism configured to convert kinetic energy of the vehicle into regenerative energy.

## Claims

1. An electrode (10) comprising
an active material-containing layer (10b) containing an oxide active material and fibrous carbon, wherein
luminance has periodical variance along a direction on a principal surface of the active material-containing layer (10b) .

2. The electrode (10) according to claim 1, wherein the periodic variance of the luminance in the direction on the principal surface of the active material-containing layer (10b) has a period in which an amplitude of the luminance is greater than or equal to 0.3 cd/m² within a range of 1 mm ≤ L(GV) ≤ 10 mm, where L(GV) is a period of variation in the luminance.

3. The electrode (10) according to claim 1 or 2, wherein the fibrous carbon has a fiber length greater than or equal to 10 µm and less than or equal to 100 µm.

4. The electrode (10) according to any one of claims 1 to 3, wherein the oxide active material contains a titanium-containing oxide.

5. A secondary battery (100) comprising:
a positive electrode (5);
a negative electrode (3); and
an electrolyte,
the negative electrode (3) comprising the electrode (10) according to any one of claims to 41.

6. A battery pack (300) comprising the secondary battery (100) according to claim 5.

7. The battery pack (300) according to claim 6, further comprising:
an external power distribution terminal (350); and
a protective circuit (346).

8. The battery pack (300) according to claim 6 or 7, comprising plural of the secondary battery (100), the secondary batteries (100) being electrically connected in series, in parallel, or in combination of in-series connection and in-parallel connection.

9. A vehicle (400) comprising the battery pack (300) according to any one of claims 6 to 8.

10. The vehicle (400) according to claim 9, wherein the vehicle (400) comprises a mechanism configured to convert kinetic energy of the vehicle (400) into regenerative energy.
